# EUROPEAN PATENT APPLICATION

(11) **EP 3 716 062 A1**
(43) Date of publication of application: **30.09.2020**
(21) Application number: 19166190.9
(22) Date of filing: 29.03.2019
(51) Int. Cl.: G06F 9/50, G06F 9/54

(54) **METHOD AND SYSTEM OF GENERATING MICROSERVICES FOR CLOUD COMPUTING SYSTEMS**

(71) Applicant: Siemens Aktiengesellschaft, 80333 München (DE)
(72) Inventor: MOHAN, Ganesh, 411027 Pune, Maharashtra (IN); CHAKRABORTY, Somnath, 411027 Pune, Maharashtra (IN); BHANDARI, Dhananajay, 411017 Pune, Maharashtra (IN)
(74) Representative: Isarpatent

(57) **Abstract**

The present invention provides a method and system of generating microservices (400, 500, 606, 608) for cloud computing systems (106A-N). In one embodiment, a method comprises determining a cloud service to be provided on a cloud computing system (106A), and determining configuration of cloud computing infrastructure (110A) associated with the cloud computing system (106A). The method further comprises obtaining cloud-infrastructure-agnostic code (402, 502, 602) from a code repository (124), wherein the cloud-infrastructure-agnostic code (402, 502, 602) is configured to provide accessibility to the cloud service. Also, the method comprises selecting one or more cloud-infrastructure-specific adapters (404, 504A-F, 604A, 604B) from a plurality of cloud-infrastructure-specific adapters based on the configuration of the cloud computing infrastructure (110A) associated with the cloud computing system (106A). Moreover, the method comprises dynamically generating a microservice (400, 500, 606, 608) for providing access to the cloud service on the cloud computing system (106A) using the cloud-infrastructure-agnostic code (402, 502, 602) and the selected cloud-infrastructure-specific adapters (404, 504A-F, 604A, 604B).

## Description

The present invention relates to the field of cloud computing, and more particularly relates to method and system of generating microservices for cloud computing systems.

Due to recent advancement of the cloud computing technology, large number of cloud services are hosted on different cloud computing systems. Each of these cloud services are accessed by a user using microservices (e.g., application programming interfaces). Due to the different configurations of the underlying cloud computing infrastructure used by the cloud computing systems, these microservices have to be specifically designed and developed for each of the cloud computing systems keeping in the mind the configurations of the underlying cloud computing infrastructures. This may result in lot of redesign and re-development of code for microservices.

In light of the above, there is a need for a method and system for generating microservices which can be easily designed and developed for different cloud computing infrastructures.

Therefore, it is the object of the present invention to provide a method and system for generating microservices using cloud-infrastructure-agnostic code and cloud-infrastructure-specific adapter(s).

The object of the present invention can be achieved by a method of generating a microservice for providing access to a cloud service on a cloud computing system. The method comprises determining a cloud service to be provided on the cloud computing system. The method comprises determining configuration of a cloud computing infrastructure associated with the cloud computing system. Furthermore, the method comprises obtaining a cloud-infrastructure-agnostic code from a code repository, and selecting one or more cloud-infrastructure-specific adapters from a plurality of cloud-infrastructure-specific adapters based on the configuration of the cloud computing infrastructure and the determined cloud service. The method comprises dynamically generating a microservice for providing access to the cloud service on the cloud computing system using the cloud-infrastructure-agnostic code and the selected cloud-infrastructure-specific adapters. Advantageously, the microservice is generated without modifying code based on the configuration of the cloud computing infrastructure.

In a preferred embodiment, the method comprises deploying the microservice on the cloud computing system such that the microservice provides access to the cloud service on the cloud computing system.

In another preferred embodiment, the method comprises generating the cloud-infrastructure-agnostic code for accessing the cloud service on the cloud computing system, and storing the cloud-infrastructure-agnostic code in the code repository.

In yet another preferred embodiment, the method comprises generating the cloud-infrastructure-specific adapters which enable cloud-infrastructure-agnostic code to interface with corresponding cloud computing infrastructure.

In further another preferred embodiment, the method comprises identifying the cloud-infrastructure-specific adapters which correspond to the configuration of the cloud computing infrastructure from the plurality of infrastructure specific adapters. The plurality of cloud-infrastructure-specific adapters comprises cloud-infrastructure-specific adapters which correspond to different cloud computing infrastructures. Furthermore, the method comprises disabling cloud-infrastructure-specific adapters which do not correspond to the configuration of the cloud computing infrastructure from the plurality of infrastructure specific adapters.

In still another preferred embodiment, the method comprises identifying the cloud-infrastructure-specific adapters which enable the cloud-infrastructure-agnostic code to interface with the cloud computing infrastructure to access the cloud service.

In further another preferred embodiment, the method comprises dynamically generating the microservice using the cloud-infrastructure-agnostic code and the cloud-infrastructure-specific adapters during build time.

The object of the present invention is also achieved by a microservice generation device. The microservice generation device comprises one or more processing units, and at least one accessible memory communicatively coupled to the one or more processing units. The accessible memory comprises a microservice module, which when executed by the one or more processing units, configured to perform to perform method steps described above.

The object of the present invention is also achieved by a system which comprises a microservice generation device described above, and one or more cloud computing systems communicatively coupled to the microservice generation device. The cloud computing systems employ different cloud computing infrastructures.

The object of the present invention is achieved by a computer-readable storage medium, having instructions stored therein, that when executed by one or more processing units, cause the processing units to perform method steps described above.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a system for generating and deploying microservices for cloud computing systems, according to an embodiment of the present invention;
- FIG 2: is a block diagram of a microservices module such as shown in FIG 1, according to an embodiment of the present invention;
- FIG 3: is a process flowchart depicting an exemplary method of generating and deploying microservices on a cloud computing system, according to an embodiment of the present invention;
- FIG 4: is a schematic representation of an exemplary microservice, according to an embodiment of the present invention;
- FIG 5: is a schematic representation of an exemplary microservice, according to another embodiment of the present invention;
- FIG 6: is a diagrammatic representation depicting generation of different microservices for deploying on different cloud-infrastructures, according to an embodiment of the present invention; and
- FIG 7: is a block diagram of a microservice generation device, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

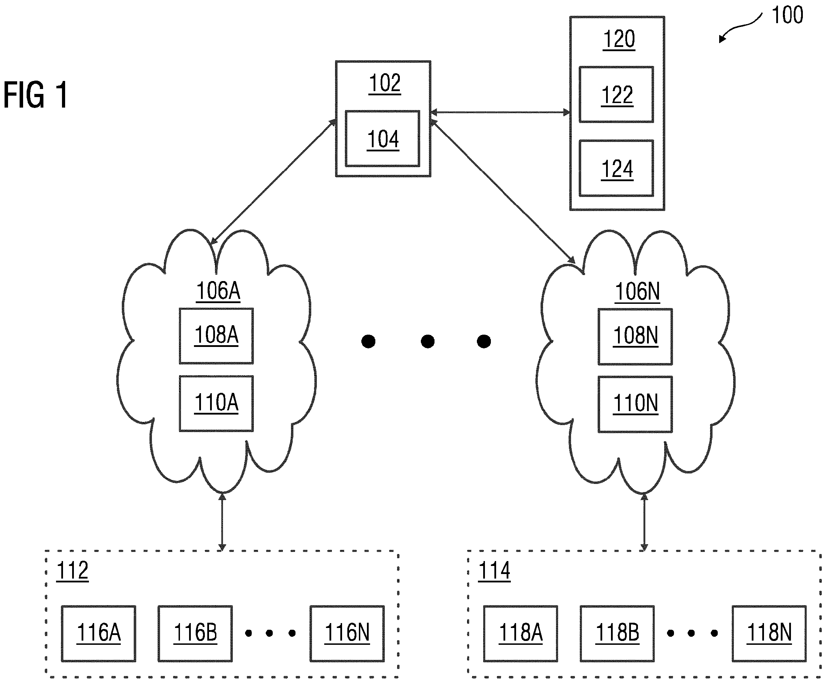

FIG 1 is a block diagram of a system 100 for generating and deploying microservices for cloud computing systems 106A-N, according to an embodiment of the present invention. Particularly, FIG 1 depicts a plurality of cloud computing systems 106A-N capable of providing cloud services for managing assets 116A-N and 118A-N respectively located in facilities 112 and 114. The cloud computing systems 106A-N are connected to the assets 116A-N and 118A-N respectively via a network (e.g., Internet). The assets 116A-N and 118A-N may include servers, robots, switches, automation devices, motors, valves, pumps, actuators, sensors and other equipments.

The system 100 also comprises a microservices generation device 102 communicatively coupled to the cloud computing systems 106AN. The microservice generation device 102 comprises a microservices module 104. The system 100 also comprises a database server 120 communicatively coupled to the microservice generation device 102. The database server 120 comprises a code repository 122 and an adapter repository 124.

The cloud computing systems 106A-N may be a public cloud, private cloud or a hybrid cloud configured to provide dedicated cloud services to its users. The cloud computing systems 106A-N comprises cloud computing platforms 108A-N and cloud computing infrastructures 110A-N respectively. Although not shown, the cloud computing systems 106A-N comprises network interfaces which enables communication between the cloud computing systems 106A-N and the assets 116A-N and 118A-N. Also, the respective network interfaces may enable communication between the cloud computing systems 106A-N and the microservices generation device 102.

The cloud computing infrastructure 110A-N may include one or more servers on which an operating system (OS) is installed. The servers may comprise one or more processing units, one or more storage devices (e.g., memory units) for storing data and machine-readable instructions including microservices and other components of the cloud computing platforms 108A-N, and other peripherals required for providing cloud computing functionality.

The cloud platforms 108A-N are platforms which provides cloud services such as data storage, data analysis, data visualization, data communication, etc. using the respective cloud computing infrastructures 110A-N, and delivers the aforementioned cloud services using the microservices deployed therein. The cloud platforms 108A-N may comprise a combination of dedicated hardware and software built on top of the cloud computing infrastructures 110A-N.

According to the present invention, the microservices generation device 102 is configured for generating and deploying microservices across the cloud computing systems 106A-N using the microservices module 104. In some embodiments, the microservices module 104 is configured for determining cloud service intended to be provided to the user. The microservices module 104 is configured for determining configuration of a cloud computing infrastructure (e.g., the cloud computing infrastructure 110A. The microservices module 104 is configured for obtaining a cloud-infrastructure-agnostic code associated with the cloud service from the code repository 122. The microservices module 104 is configured for selecting cloud-infrastructure-specific adapters which would enable the cloud-infrastructure-agnostic code to provide access to the cloud service from a plurality of cloud-infrastructure specific adapters stored in the adapter repository 124. The microservices module 104 is configured for dynamically generating a microservice for providing access to the cloud service by combining the cloud-infrastructure-agnostic code and the cloud-infrastructure-specific adapters. For example, the microservices may be application programming interfaces (APIs). The microservices module 104 is configured for dynamically deploying the microservice on the cloud computing infrastructure to provide accessibility to the cloud service.

One can envision that the microservice generation device 102 and the database server 120 may become part of or implemented into one of the cloud computing systems 106A-N.

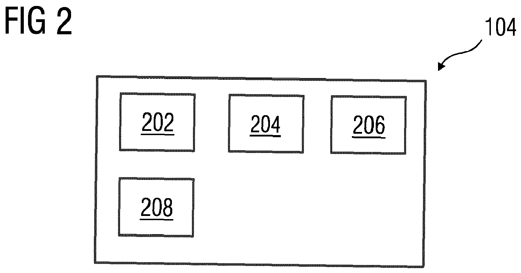

FIG 2 is a block diagram of the microservices module 104 as shown in FIG 1, according to an embodiment of the present invention. The microservices module 104 comprises a code generation module 202, an adapter generation module 204, a microservice generation module 206, and a microservice deployment module 208.

The code generation module 202 is configured for generating a cloud-infrastructure-agnostic code for providing access to a specific cloud service (e.g., storage service) on any of the cloud computing systems 106A-N. The code generation module 202 is configured for storing the cloud-infrastructure-agnostic code in the code repository 122. The adapter generation module 204 is configured for generating cloud-infrastructure-specific adapters for enabling the cloud-infrastructure-agnostic code to interface with specific cloud computing infrastructure (e.g., the cloud computing infrastructure 110A) to provide accessibility to the cloud service. The adapters include libraries. The adapter generation module 204 is configured for storing the cloud-infrastructure-specific adapters in the adapter repository 124. In some embodiments, the cloud-infrastructure-specific adapters are re-usable for microservices generated for the specific cloud computing infrastructure.

The microservice generation module 206 is configured for dynamically generating a microservice for providing access to the cloud service by combining the cloud-infrastructure-agnostic code and the cloud-infrastructure-specific adapters. The microservices deployment module 208 is configured for dynamically deploying the microservice on the cloud computing infrastructure to provide accessibility to the cloud service.

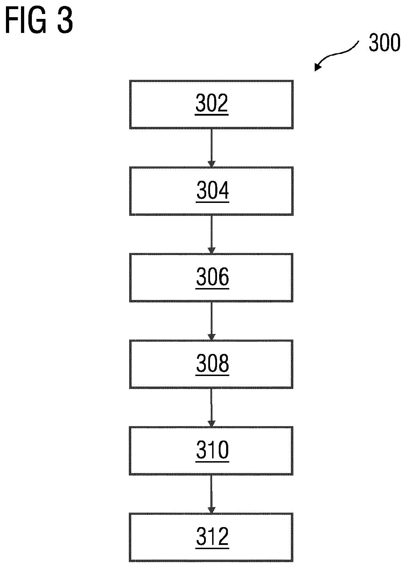

FIG 3 is a process flowchart depicting an exemplary method of generating and deploying microservices on the cloud computing system 106A, according to an embodiment of the present invention. At step 302, a cloud service to be provided on a cloud computing system 106A is determined. For example, the cloud service can be cloud storage service for storing data of assets 116A-N in a facility 114A. The cloud computing system 106A may comprise a cloud computing platform 108A on which cloud service would be hosted, and a cloud computing infrastructure 110A on which the cloud computing platform 108A is executed.

At step 304, configuration of the cloud computing infrastructure 110A associated with the cloud computing system 106A is determined. At step 306, cloud-infrastructure-agnostic code for a code repository 122. The cloud-infrastructure-agnostic code is configured to provide accessibility to the cloud service. The cloud-infrastructure-agnostic code is independent of the cloud computing infrastructure on which a microservice would be deployed. In other words, the cloud-infrastructure-agnostic code need not be modified to deploy a microservice on different cloud computing infrastructures. The cloud-infrastructure-agnostic code can deliver the same functionality across the cloud computing infrastructures 110A-N.

At step 308, one or more cloud-infrastructure-specific adapters are selected from a plurality of cloud-infrastructure-specific adapters based on the cloud service and configuration of the cloud computing infrastructure 110A. In one embodiment, the cloud-infrastructure-specific adapters include libraries which can enable the cloud-infrastructure-agnostic code to be executed on the cloud computing infrastructure 110A. Consider that the cloud computing infrastructure 110A is Amazon Web Service (AWS) infrastructure. In such case, the cloud-infrastructure-specific adapter may be libraries which can enable the cloud-infrastructure-agnostic code to interface with the Amazon Web Service infrastructure to deliver data storage service.

At step 310, a microservice for providing access to the cloud service on the cloud computing system 106A is dynamically generated based on the cloud-infrastructure-agnostic code and the cloud-infrastructure-specific adapters. In some embodiments, the microservice may be application programming interface (API). For example, the microservice for providing access to the storage service on the Amazon Web Service infrastructure is generated using the cloud-infrastructure-agnostic code for providing the storage service and the cloud-infrastructure-specific adapters which can enable the cloud-infrastructure-agnostic code to interface with the Amazon Web Service infrastructure to deliver the storage service.

At step 312, the microservice is deployed on the cloud computing platform 108A of the cloud computing system 106A. For example, when a user wants to access storage service provided by the cloud computing platform 108A, the cloud computing platform 108A would execute the microservice on the cloud computing infrastructure 110A to deliver the storage service. In this manner, microservice can be automatically generated without rewriting code for providing access to the cloud service, each time the microservice is required to be deployed on different cloud computing infrastructure.

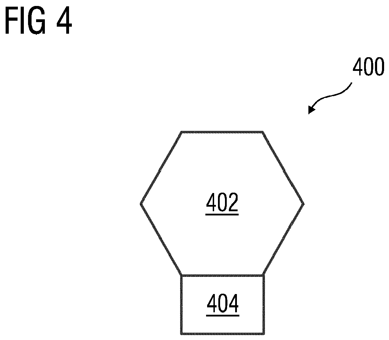

FIG 4 is a schematic representation of a microservice 400, according to an embodiment of the present invention. Particularly, FIG 4 shows a microservice 400 comprising a cloud-infrastructure-agnostic code 402 and a cloud-infrastructure-specific adapter 404. The cloud-infrastructure-agnostic code can provide access to a cloud service by interfacing with the cloud computing infrastructure 110A using the cloud-infrastructure-specific adapter 404 when the microservice is deployed on the cloud computing infrastructure 110A. It can be noted that the cloud-infrastructure-specific adapter 404 can be used with any other cloud-infrastructure-agnostic code based on the type of cloud service to be provided using the cloud computing infrastructure 110A. One skilled in the art will understand that the cloud-infrastructure-agnostic code can provide a desired cloud service on any of the cloud computing infrastructures 110A-N using adapters specific to the cloud computing infrastructures 110A-N.

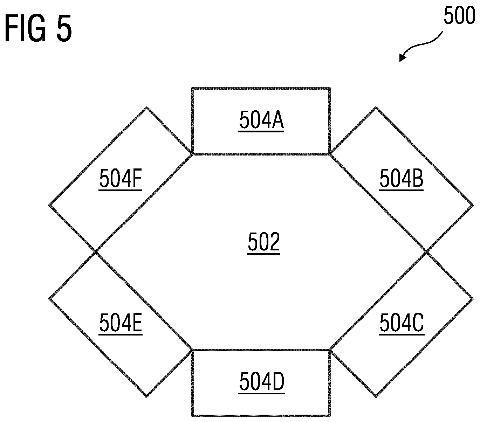

FIG 5 is a schematic representation of a microservice 500, according to another embodiment of the present invention. As shown in FIG 5, the microservice 500 includes a cloud-infrastructure-agnostic code 502, and cloud-infrastructure specific adapters 504A-F. The cloud-infrastructure-specific adapters 504A-F are specific to the respective cloud computing systems 106A-N. Hence, when the microservice 500 is to be deployed on the cloud computing system 106A, associated cloud-infrastructure-specific adapter 502A is activated whereas the cloud-infrastructure-specific adapters 504B-F are disabled. Thus, the cloud-infrastructure-specific adapter 502A enables the cloud-infrastructure-agnostic code 502 to interface with the cloud computing infrastructure 110A to provide access to the associated cloud service.

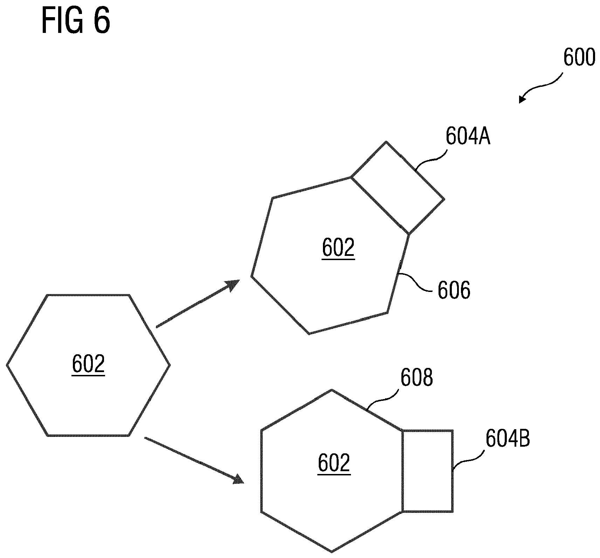

FIG 6 is a diagrammatic representation 600 depicting generation of different microservices 606 and 608 from a cloud-infrastructure-agnostic code 602 for deploying on different cloud-infrastructures, according to an embodiment of the present invention. As shown in FIG 6, a cloud-infrastructure-agnostic code 602 which is developed to provide access to a cloud service via different cloud computing systems 106A-N. Consider that a microservice needs to be deployed on the cloud computing infrastructure 110A and the cloud computing infrastructure 110B. The cloud computing infrastructure 11A and the cloud computing infrastructure 110B belong to different cloud service providers (e.g., Amazon Web Service and Microsoft Azure). In such a case, a microservice 606 is generated for deploying the microservice 606 on the cloud computing infrastructure 110A, and the microservice 608 is generated for deploying the microservice 608 on the cloud computing infrastructure 110B to provide the cloud service. The microservice 606 is generated by combining the cloud-infrastructure-agnostic code 602 and a cloud-infrastructure-specific adapter 604A corresponding to the cloud computing infrastructure 110A. Similarly, the microservice 608 is generated by combining the cloud-infrastructure-agnostic code 602 and a cloud-infrastructure-specific adapter 604B corresponding to the cloud computing infrastructure 110B. In this manner, the microservices can be generated and deployed on different cloud computing systems 106A-N to provide same cloud service without modifying the cloud-infrastructure-agnostic code 602.

Consider that an application needs a cloud-based storage solution and wants to use S3 on Amazon Webservice and Blob Storage on Microsoft Azure. In such a case, a microservice 606 for deploying on Amazon Web Service is generated using the cloud-infrastructure-agnostic code 602 and the cloud-infrastructure-specific adapter 604A. Similarly, a microservice 608 for deploying on Microsoft Azure is generated using the cloud-infrastructure-agnostic code 602 and the cloud-infrastructure-specific adapter 604B.

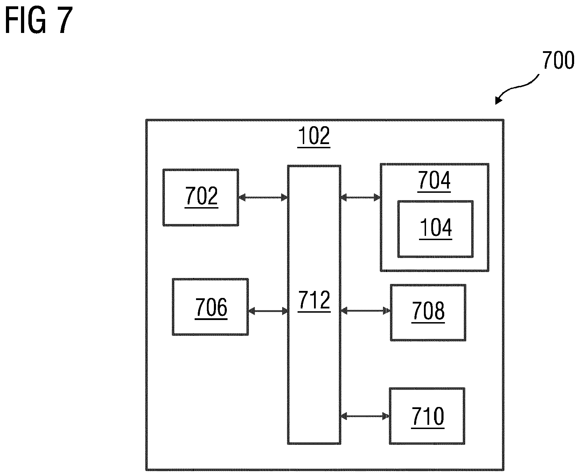

FIG 7 is a block diagram of a microservice generation device 102, according to an embodiment of the present invention. The microservice generation device 102 may be a personal computer, a laptop computer, a tablet, smart phone, and the like. In FIG 7, the microservice generation device 102 includes one or more processing units 702, an accessible memory 704, a storage unit 706, an input/output unit 708, a communication interface 710, and a bus 712.

The one or more processing units 702, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing units 702 may also include embedded controllers, such as generic or programmable logic devices or arrays, application specific integrated circuits, single-chip computers, and the like.

The memory 704 may be volatile memory and non-volatile memory. The memory 704 may be coupled for communication with the processing units 702. The processing units 702 may execute instructions and/or code stored in the memory 704. A variety of computer-readable storage media may be stored in and accessed from the memory 704. The memory 704 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 704 includes the microservices module 104 for generating and deploying microservices across the cloud computing systems 106A-N using cloud-infrastructure-agnostic code as shown in FIG 1. The storage unit 706 may be a non-transitory storage medium which stores microservices generated by the microservices module 104.

The input/output unit 708 may include input means such as keypad, touch-sensitive display, camera (such as a camera receiving gesture-based inputs), etc. capable of receiving input signal such as user commands to generate and deploy the microservices. The input/output unit 708 may also be configured to display a graphical user interface. The communication interface 710 may enable the microservice generation device 102 to communicate with the cloud computing systems 106A-N and the database server 120. The bus 712 acts as interconnect between the processing units 702, the memory 704, the storage unit 706, the input/output unit 708, and the communication interface 710.

Those of ordinary skilled in the art will appreciate that the hardware depicted in FIG 7 may vary for specific implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Further Embodiments:

1. A method of generating a microservice (400, 500, 606, 608) for providing access to a cloud service on a cloud computing system (106A), comprising:
   determining a cloud service to be provided on the cloud computing system (106A);
   determining configuration of a cloud computing infrastructure (110A) associated with the cloud computing system (106A);
   obtaining cloud-infrastructure-agnostic code (402, 502, 602) from a code repository (122), wherein the cloud-infrastructure-agnostic code (402, 502, 602) is configured to provide accessibility to the cloud service;
   selecting one or more cloud-infrastructure-specific adapters (404, 504, 604A, 604B) from a plurality of cloud-infrastructure-specific adapters based on the configuration of the cloud computing infrastructure (110A) and the determined cloud service; and
   dynamically generating a microservice (400, 500, 606, 608) for providing access to the cloud service on the cloud computing system (106A) using the cloud-infrastructure-agnostic code (402, 502, 602) and the selected cloud-infrastructure-specific adapters (404, 504, 604A, 604B).
2. The method according to embodiment 1, further comprising:
   deploying the microservice (400, 500, 606, 608) on the cloud computing system (106A) such that the microservice (400, 500, 606, 608) provides access to the cloud service on the cloud computing system (106A).
3. The method according to embodiments 1 or 2, further comprising:
   generating the cloud-infrastructure-agnostic code (402, 502, 602) for accessing the cloud service on the cloud computing system (106A); and
   storing the cloud-infrastructure-agnostic code (402, 502, 602) in the code repository (122).
4. The method according to embodiments 1 or 3, further comprising:
   generating the cloud-infrastructure-specific adapters (404, 504A-F, 604A, 604B) which enable cloud-infrastructure-agnostic code (402, 502, 602) to interface with the corresponding cloud computing infrastructure (110A).
5. The method according to embodiment 1, wherein selecting the cloud-infrastructure-specific adapters (404, 504A-F, 604A, 604B) based on the configuration of the cloud computing infrastructure (110A) associated with the cloud computing system (102) comprises:
   identifying the cloud-infrastructure-specific adapters ( 504A) which correspond to the configuration of the cloud computing infrastructure (110A) from the plurality of infrastructure specific adapters (504A-F), wherein the plurality of cloud-infrastructure-specific adapters (504A-F) comprises cloud-infrastructure-specific adapters which correspond to different cloud computing infrastructures (110AN); and
   disabling cloud-infrastructure-specific adapters (504B-F) which do not correspond to the configuration of the cloud computing infrastructure (110A) from the plurality of infrastructure specific adapters (504A-F).
6. The method according to embodiment 1, wherein selecting the cloud-infrastructure specific adapters (404, 504A-F, 604A, 604B) based on the configuration of the cloud computing infrastructure (110A) comprises:
   identifying the cloud-infrastructure-specific adapters which enable the cloud-infrastructure-agnostic code (402, 502, 602) to interface with the cloud computing infrastructure (110A) to access the cloud service.
7. The method according to embodiment 1, wherein dynamically generating the microservice (400, 500, 606, 608) for providing access to the cloud service on the cloud computing system (106A), comprises:
   dynamically generating the microservice (400, 500, 606, 608) using the cloud-infrastructure-agnostic code (402, 502, 602) and the cloud-infrastructure-specific adapters (404, 504A-F, 604A, 604B) during build time.
8. A microservice generation device (102) comprising:
   one or more processing units (702); and
   at least one accessible memory (704) communicatively coupled to the one or more processing units (702), wherein the accessible memory (704) comprises a microservice module (104), which when executed by the one or more processing units (702), configured to perform to perform method steps according to claims 1 to 7.
9. A system (100) comprising:
   a microservice generation device (102) according to embodiment 8; and
   one or more cloud computing systems (106A-N) communicatively coupled to the microservice generation device (102), wherein the cloud computing systems (106A-N) employ different cloud computing infrastructures (110A-N).
10. A computer-readable storage medium, having instructions stored therein, that when executed by one or more processing units (702), cause the processing units (702) to perform method steps according to embodiments 1 to 7.

### List of reference numerals

100 - System
102 - Microservice generation device
104 - Microservices module
106A-N - Cloud Computing Systems
108A-N - Cloud computing platforms
110A-N - Cloud computing infrastructure
112 - Facility
114 - Facility
116A-N - Assets
118A-N - Assets
120 - Database Server
122 - Code repository
124 - Adapter repository
202 - Code generation module
204 - Adapter generation module
206 - Microservice generation module
208 - Microservice deployment module
400 - Microservice
402 - Cloud-infrastructure-agnostic code
404 - Cloud-infrastructure-specific adapter
500 - Microservice
502 - Cloud-infrastructure-agnostic code
504A-F - Cloud-infrastructure-specific adapter
602 - Cloud-infrastructure-agnostic code
604A - Cloud-infrastructure-specific adapter
604B - Cloud-infrastructure-specific adapter
606 - Microservice
608 - Microservice
702 - Processing units
704 - Memory
706 - Storage Unit
708 - Input/output unit
710 - Communication interface
712 - Bus

## Claims

1. A method of generating a microservice (400, 500, 606, 608) for providing access to a cloud service on a cloud computing system (106A), comprising:
determining a cloud service to be provided on the cloud computing system (106A);
determining configuration of a cloud computing infrastructure (110A) associated with the cloud computing system (106A);
obtaining cloud-infrastructure-agnostic code (402, 502, 602) from a code repository (122), wherein the cloud-infrastructure-agnostic code (402, 502, 602) is configured to provide accessibility to the cloud service;
selecting one or more cloud-infrastructure-specific adapters (404, 504, 604A, 604B) from a plurality of cloud-infrastructure-specific adapters based on the configuration of the cloud computing infrastructure (110A) and the determined cloud service; and
dynamically generating a microservice (400, 500, 606, 608) for providing access to the cloud service on the cloud computing system (106A) using the cloud-infrastructure-agnostic code (402, 502, 602) and the selected cloud-infrastructure-specific adapters (404, 504, 604A, 604B).

2. The method according to claim 1, further comprising:
deploying the microservice (400, 500, 606, 608) on the cloud computing system (106A) such that the microservice (400, 500, 606, 608) provides access to the cloud service on the cloud computing system (106A).

3. The method according to claims 1 or 2, further comprising:
generating the cloud-infrastructure-agnostic code (402, 502, 602) for accessing the cloud service on the cloud computing system (106A); and
storing the cloud-infrastructure-agnostic code (402, 502, 602) in the code repository (122).

4. The method according to claims 1 or 3, further comprising:
generating the cloud-infrastructure-specific adapters (404, 504A-F, 604A, 604B) which enable cloud-infrastructure-agnostic code (402, 502, 602) to interface with the corresponding cloud computing infrastructure (110A).

5. The method according to claim 1, wherein selecting the cloud-infrastructure-specific adapters (404, 504A-F, 604A, 604B) based on the configuration of the cloud computing infrastructure (110A) associated with the cloud computing system (102) comprises:
identifying the cloud-infrastructure-specific adapters ( 504A) which correspond to the configuration of the cloud computing infrastructure (110A) from the plurality of infrastructure specific adapters (504A-F), wherein the plurality of cloud-infrastructure-specific adapters (504A-F) comprises cloud-infrastructure-specific adapters which correspond to different cloud computing infrastructures (110AN); and
disabling cloud-infrastructure-specific adapters (504B-F) which do not correspond to the configuration of the cloud computing infrastructure (110A) from the plurality of infrastructure specific adapters (504A-F).

6. The method according to claim 1, wherein selecting the cloud-infrastructure specific adapters (404, 504A-F, 604A, 604B) based on the configuration of the cloud computing infrastructure (110A) comprises:
identifying the cloud-infrastructure-specific adapters which enable the cloud-infrastructure-agnostic code (402, 502, 602) to interface with the cloud computing infrastructure (110A) to access the cloud service.

7. The method according to claim 1, wherein dynamically generating the microservice (400, 500, 606, 608) for providing access to the cloud service on the cloud computing system (106A), comprises:
dynamically generating the microservice (400, 500, 606, 608) using the cloud-infrastructure-agnostic code (402, 502, 602) and the cloud-infrastructure-specific adapters (404, 504A-F, 604A, 604B) during build time.

8. A microservice generation device (102) comprising:
one or more processing units (702); and
at least one accessible memory (704) communicatively coupled to the one or more processing units (702), wherein the accessible memory (704) comprises a microservice module (104), which when executed by the one or more processing units (702), configured to perform to perform method steps according to claims 1 to 7.

9. A system (100) comprising:
a microservice generation device (102) according to claim 8; and
one or more cloud computing systems (106A-N) communicatively coupled to the microservice generation device (102), wherein the cloud computing systems (106A-N) employ different cloud computing infrastructures (110A-N).

10. A computer-readable storage medium, having instructions stored therein, that when executed by one or more processing units (702), cause the processing units (702) to perform method steps according to claims 1 to 7.
